# EUROPÄISCHE PATENTSCHRIFT

(11) **EP 3 088 975 B1**
(45) Veröffentlichungstag und Bekanntmachung des Hinweises auf die Patenterteilung: **19.08.2020**
(21) Anmeldenummer: 16164803.5
(22) Anmeldetag: 12.04.2016
(51) Int. Cl.: G05B 19/042, H04L 12/40

(54) **KANALBEZOGENE GERÄTEPARAMETRIERUNG**
CHANNEL RELATED DEVICE PARAMETERIZATION
PARAMETRAGE D'APPAREIL SE RAPPORTANT A UN CANAL

(30) Priorität: 27.04.2015 DE 102015207635
(43) Veröffentlichungstag der Anmeldung: 02.11.2016
(73) Patentinhaber: Siemens Schweiz AG, 8047 Zürich (CH)
(72) Erfinder: HOCH, Peter, 93080 Pentling (DE); PENZKOFER, Martin, 94356 Pillnach (DE)
(74) Vertreter: Maier, Daniel Oliver

(56) Entgegenhaltungen:
- EP-A1- 2 247 989
- DE-A1-102007 046 572
- DE-A1-102011 075 608

## Beschreibung

Die Erfindung betrifft ein Verfahren zur Projektierung einer busorientierten programmierbaren Elektroinstallation sowie ein entsprechendes Computerprogramm. Weiterhin betrifft die Erfindung ein Konfigurationsgerät zur Bereitstellung von Projektierungsdaten für ein Applikationsprogramm eines Busteilnehmers einer busorientierten programmierbaren Elektroinstallation. Ferner betrifft die Erfindung ein computerlesbares Medium, das auf einem Computer ausführbare Befehle aufweist zur Projektierung einer busorientierten programmierbaren Elektroinstallation.

Um in modernen Gebäuden bzw. Häusern eine einfache und komfortable Bedienung der verschiedenen Komponenten zu ermöglichen, können diese über einen Installationsbus angesteuert werden. Ein solcher Installationsbus ist beispielsweise der europäische Installationsbus (EIB), der in dem KNX-Standard beschrieben ist.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder rekonfiguriert werden können. Die unter den Busgeräten ausgetauschten Daten können beispielsweise Sensordaten oder Steuerdaten sein.

Mit EIB (EIB = Europäischer Installationsbus) oder KNX (KNX ist ein offener Standard für die Vernetzung und Steuerung von Gebäudetechnik (ehemals EIB)) wurden Gebäudemanagementsysteme entwickelt, die für alle wichtigen Anlagen in der Gebäudetechnik eingesetzt werden können. Durch EIB oder KNX können die einzelnen Gewerke gemeinsam geplant und ausgeführt werden. Derartige Gebäudemanagementsysteme stellen sicher, dass Steuerungsinformationen an alle Gewerke der Gebäudeautomation weitergeleitet werden und dass alle Gewerke in einer gemeinsamen Sprache kommunizieren.

Das zugrundliegende Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet. Bei der Inbetriebsetzung eines derartigen Bussystems müssen die Kommunikationsbeziehungen der Busteilnehmer projektiert werden. Im Falle des EIB bzw. KNX-Buses kommt hierbei häufig die EIB Tool-Software (ETS) zum Einsatz. Hierbei handelt es sich um eine Software, die auf einem PC bzw. Laptop lauffähig ist, der über eine RS232-Schnittstelle mit dem Bus verbunden wird. Bei der ETS handelt es sich um ein datenbankbasiertes graphisches Werkzeug zur Projektierung einer busorientierten programmierbaren Elektroinstallation. In der ETS-Datenbank sind die Projektierungsdaten für jeden einzelnen Busteilnehmer bzw. jedes einzelne Applikationsprogramm getrennt voneinander gespeichert.

Jedem Busteilnehmer bzw. Busgerät sind je nach Funktionsumfang des Gerätes ein oder mehrere Kanäle zugeordnet. Im Rahmen der Projektierung bzw. Parametrierung werden die Kanäle mittels vorbestimmbarer Funktionen miteinander verknüpft. Ein Geräts ist sozusagen in verschiedene Kanäle zerlegt, die einer jeweiligen Funktion zugeordnet werden können. Es erfolgt eine Zuordnung des Kanals (d.h. des in ein oder mehrere Kanäle zerlegten Geräts) zu einer Funktion des Bussystems.

Bisher können Parametrierungen nur innerhalb einer Gerätefamilie eines Herstellers von anderen Geräten übernommen werden. Eine herstellerübergreifende Parameterübernahme ist nicht bzw. nur mit einem grossen Aufwand möglich. Eine Parameterübernahme in ein Gerät mit geringerer Funktionalität ist bisher nicht möglich.

Die deutsche Patentanmeldung DE102011075608A1 offenbart ein Verfahren zum Zuordnen eines physikalischen Kanals eines Sensors, der an einen Bus eines Bus-Systems angeschlossen ist, zu einem Kanal eines in einem Inbetriebnahmeprogramm virtuell dargestellten Sensors.

Die deutsche Patentanmeldung DE102007046572A1 offenbart ein Prozesssteuerungssystem und ein Verfahren zur Steuerung einer Mehrzahl von Feldgeräten, wobei das Prozess-steuerungssystem ein Steuerungsgerät und eine Kommunikationsprotokollkomponente mit mindestens einem Kommunikationskanal aufweist, der selektiv konfigurierbar ist, ein erstes oder zweites Kommunikationsprotokoll zu verwenden und mit mindestens einem der Feldgeräte zu kommunizieren.

Die europäische Patentschrift EP2247989B1 offenbart eine Vorrichtung und ein Verfahren zum Projektieren von Feldgeräten einer technischen Anlage, insbesondere einer Kraftwerksanlage, für eine funktionale Einbindung der Feldgeräte in ein Leitsystem der technischen Anlage.

Aus dem deutschen Patent DE10157903B4 ist es bekannt, die Kanäle mittels vorbestimmbarer Funktionen miteinander zu verknüpfen. Dies ist aber insbesondere für eine herstellerübergreifende Parameterübernahme unzureichend und nicht automatisierbar.

Es ist daher die Aufgabe der vorliegenden Erfindung ein Verfahren und ein Konfigurationsgerät für die Projektierung eines Gerätes für eine busorientierte programmierbare Elektroinstallation bereitzustellen, welche eine einfache bzw. automatisierbare herstellerübergreifende Parameterübernahme ermöglichen.

Die Aufgabe wird gelöst durch ein Verfahren zur Projektierung von Busteilnehmern einer busorientierten programmierbaren Elektroinstallation, nach Anspruch 1.

Dadurch ist eine Konvertierung der Projektierung bzw. Parametrierung von mehreren (alten) Busgeräten in ein neues Busgerät oder von Teilmengen einer vorhandenen Parametrierung in ein neues Busgerät (z.B. nur für einen Kanal wird die Parametrierung übernommen) möglich. Auch können Parametrierungen von mehreren Geräten in mehrere neue Geräte übernommen werden (z.B. kann eine Parametrierung für eine Funktionseinheit aus Taster, Bewegungsmelder, Lichtsensor und Dimmaktor mit Lichtregelung für ein Funktionseinheiten wie "Taster mit Lichtregelung" oder "Bewegungsmelder mit Lichtsensor und Dimmaktor" übernommen werden. Weiterhin ermöglicht das erfindungsgemässe Verfahren eine herstellerübergreifende Parameterübernahme (d.h. Parametrierungen können für Geräte unterschiedlichen Hersteller verwendet werden). Auch ist eine Parameterübernahme in ein Gerät mit geringerer Funktionalität als das Ursprungsgerät möglich. So ist es z.B. möglich eine 8 Kanal Parametrierung in eine 4 Kanalparametrierung zu konvertieren. Das Kanalzuordnungsschema enthält eine Zuordnungsvorschrift ("channel conversion") für die Zuordnung von Kanälen von Quellgeräten (Ursprungsgeräten) zu den Kanälen der Zielgeräte. Damit ist insbesondere eine herstellerübergreifende Verwendung einer vorhandenen Parametrierung eines Gerätes möglich.

Eine erste vorteilhafte Ausgestaltung der Erfindung liegt darin, dass, basierend auf dem definierten Kanalzuordnungsschema, im Konfigurationsprogramm die möglichen Zuordnungen der Parameter und Kommunikationsobjekte zu den Kanälen des jeweiligen Busteilnehmers, in einer entsprechenden Benutzerschnittstelle angeboten werden. Mit Vorteil handelt es sich um eine grafische bzw. menügeführte Benutzerschnittstelle (z.B. mit drop-down-Menüs). Mit Vorteil ist die Benutzerschnittstelle auf die jeweiligen Kanalstrukturen der zugrundeliegenden Geräte abgestimmt. Dies ermöglicht eine effiziente Parameterübernahme zwischen den Geräten.

Eine weitere vorteilhafte Ausgestaltung der Erfindung liegt darin, dass, basierend auf dem definierten Kanalzuordnungsschema, durch das Konfigurationsprogramm eine automatische Zuordnung der Parameter und Kommunikationsobjekte zu den Kanälen des jeweiligen Busteilnehmers erfolgt. Mit Vorteil ist das Kanalzuordnungsschema in definierten Datenstrukturen beschrieben bzw. implementiert. Damit ist es maschinenlesbar und mit entsprechender Software (z.B. ein Spreadsheet-Programm) und Hardware (z.B. PC, Laptop) und eine Konvertierung der Parametrierung zwischen den Busgeräten automatisierbar.

Eine weitere vorteilhafte Ausgestaltung der Erfindung liegt darin, dass die Projektierungsdaten in einem strukturierten Format (z.B. XML, Extensible Markup Language) erzeugt werden. Dadurch ist der Import und/oder der Export der Projektierungsdaten zwischen Geräten bzw., zwischen Geräten und einem Konfigurationsgerät (z.B. ETS) sehr leicht möglich und insbesondere automatisierbar. Anstelle von XML kann auch eine andere standardisierte Metasprache für die Projektierungsdatenübergabe verwendet werden wie beispielsweise SGML (Standard Generalized Markup Language), HTML (Hypertext Markup Language) oder dergleichen.

Die Aufgabe wird weiterhin gelöst durch ein Computerprogramm zur Projektierung einer busorientierten programmierbaren Elektroinstallation mit Instruktionen zur Ausführung des erfindungsgemässen Verfahrens. Dadurch kann die Projektierung computerunterstützt und effektiv erfolgen, z.B. auf einem Personal Computer (PC).

Die Aufgabe wird weiterhin gelöst durch ein computerlesbares Medium, das auf einem Computer ausführbare Befehle aufweist zur Projektierung einer busorientierten programmierbaren Elektroinstallation nach dem erfindungsgemässen Verfahren. Dadurch kann das Computerprogramm zur Projektierung sehr leicht auf einem Computer implementiert bzw. installiert werden.

Die Aufgabe wird weiterhin gelöst durch ein Konfigurationsgerät zur Bereitstellung von Projektierungsdaten für ein Applikationsprogramm eines Busteilnehmers einer busorientierten programmierbaren Elektroinstallation, nach Anspruch 7.

Als Hardware für das Konfigurationsgerät kann ein Personal Computer (PC), Laptop oder Tablet-Computer verwendet werden, mit geeigneter Prozessor- und Speicherausstattung, geeigneten Eingabemitteln (z.B. Tastatur, Maus, Touch-Bildschirm etc.) und geeigneten Schnittstellen zur Datenübertragung (z.B. USB-Schnittstelle). Als Mittel zum Erzeugen der Projektierungsdaten werden mit Vorteil ein oder mehrere Konfigurationsprogramme (d.h. geeignet programmierte Software) verwendet, z.B. entsprechende Engineering- bzw. Projektierungswerkzeuge. Für die Projektierung von EIB- oder KNX-Bussystemen wird üblicherweise die Engineering-Tool-Software (ETS) verwendet. Hierbei handelt es sich um eine Software, die auf einem PC bzw. Laptop lauffähig ist, der über eine RS232 Schnittstelle mit dem Bus verbunden wird. Bei der ETS handelt es sich um ein datenbankbasiertes graphisches Werkzeug zur Projektierung einer busorientierten programmierbaren Elektroinstallation. In der ETS-Datenbank sind die Projektierungsdaten für jeden einzelnen Busteilnehmer bzw. jedes einzelne Applikationsprogramm getrennt voneinander gespeichert. Als Mittel zum Zuordnen der Parameter und Kommunikationsobjekte zu Kanälen des Busteilnehmers wird mit Vorteil eine grafische oder menügeführte Benutzerschnittstelle (z.B. mit drop-down-Menüs) verwendet. Mit Vorteil ist das Kanalzuordnungsschema in einer formalen bzw. maschinenlesbaren Beschreibungssprache (z.B. XML) realisiert, dies erleichtert den Import und Export zwischen den Busgeräten bzw. zwischen einem Busgerät und einem Konfigurationsprogramm (z.B. ETS). Damit ist insbesondere eine herstellerübergreifende Verwendung bzw. Wiederverwendung einer vorhandenen Parametrierung eines Gerätes möglich.

Eine weitere vorteilhafte Ausgestaltung der Erfindung liegt in einer Benutzerschnittstelle, wobei, basierend auf dem definierten Kanalzuordnungsschema, auf der Benutzerschnittstelle die möglichen Zuordnungen der Parameter und Kommunikationsobjekte zu den Kanälen des jeweiligen Busteilnehmers, angezeigt werden. Mit Vorteil ist die Benutzerschnittstelle auf die jeweiligen Kanalstrukturen der zugrundeliegenden Geräte abgestimmt und ermöglicht eine effiziente Zuordnung von Kanälen eines Quellgerätes (Ursprungsgerät) zu den entsprechenden Kanälen eines Zielgerätes.

Eine weitere vorteilhafte Ausgestaltung der Erfindung liegt darin, dass, basierend auf dem definierten Kanalzuordnungsschema, eine automatische Zuordnung der Parameter und Kommunikationsobjekte zu den Kanälen des jeweiligen Busteilnehmers erfolgt. Dies ermöglicht u.a. eine effektive Projektierung von Busteilnehmern der busorientierten programmierbaren Elektroinstallation. Mit Vorteil ist das Kanalzuordnungsschema in definierten Datenstrukturen beschrieben bzw. implementiert. Damit ist es maschinenlesbar und mit entsprechender Software (z.B. ein Spreadsheet-Programm) und Hardware (z.B. PC, Laptop) und eine Konvertierung der Parametrierung zwischen den Busgeräten automatisierbar.

Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung zur Projektierung einer busorientierten programmierbaren Elekt roinstallation,
- FIG 2: ein beispielhaftes Kanalzuordnungsschema zur Realisierung der vorliegenden Erfindung, und
- FIG 3: ein beispielhaftes Ablaufdiagramm für ein Verfahren zur Projektierung einer busorientierten programmierbaren Elektroinstallation.

Gebäudeinstallationen, insbesondere Elektroinstallationen zur Steuerung von Lichtquellen, Jalousien, Ventilatoren, Heizungen, Alarmanlagen etc. werden häufig unter Verwendung von standardisierter Bustechnik realisiert, z.B. mit einem KNX-Bussystem. Mit einem KNX-Bussystem werden in einem Gebäude Bedienelemente (Sensoren) und entsprechende Aktoren miteinander verbunden und angesteuert. Jeder Teilnehmer eines solchen Bussystems verfügt über einen eigenen Mikroprozessor und kann somit selbständig und unabhängig von einem zentralen Prozessor seine Daten verwaltet. Jedem Busteilnehmer wird hierzu ein Applikationsprogramm mit entsprechenden Kommunikationsobjekten und Parametern zugeordnet. Bei der Inbetriebnahme eines KNX-Bussystems (oder einem ähnlichen System) müssen die Kommunikationsbeziehungen und Parameter der Busteilnehmer projektiert werden. Für die Projektierung von KNX-Bussystemen wird üblicherweise die Engineering-Tool-Software (ETS) verwendet. Bei der ETS handelt es sich um ein datenbankbasiertes grafisches Werkzeug (Konfigurationsprogramm) zur Projektierung von busorientierten programmierbaren Elektroinstallationen. Unter Verwendung einer Datenbank werden in der ETS die Projektierungsdaten, d. h. die Kommunikationsbeziehungen und die Geräteparameter, für jeden Busteilnehmer bzw. jedes Applikationsprogramm separat erstellt und abschließend über eine Schnittstelle (z.B. USB-Datenschnittstelle) in das Bussystem und deren Teilnehmer übertragen bzw. eingespeist.

In einer ETS-Datenbank sind die Projektierungsdaten für jeden einzelnen Busteilnehmer bzw. jedes einzelne Applikationsprogramm getrennt voneinander gespeichert. Bei einer Änderung eines Applikationsprogramms muss dieses von Hand neu projektiert werden. Dies ist mit einem hohen Aufwand verbunden und fehleranfällig, denn die Änderungen basieren auf einer manuellen Kommentierung. Weiterhin lassen die Daten in der ETS nur einen projektbasierten Zugriffsschutz zu und enthalten keine für den Benutzer (Nutzer des Gebäudes) relevante Information. Durch diese fehlende Info ist es dem Nutzer nicht oder nur sehr aufwändig möglich eine Umparametrierung vorzunehmen.

Bei busorientierten Elektroinstallationen (z.B. bei KNX-Systemen) werden die einzelnen Busgeräte (z.B. Aktoren, Sensoren) parametriert. Diese Parametrierung erfolgt bei KNX-Systemen mit der ETS (Engineering Tool Software). Hierzu muss der Installateur über ein Programmiergerät (mit Konfigurationsprogramm (z.B. ETS)) jedes Gerät entsprechend programmieren und Funktionen zuordnen. Jedem Gerät sind ein oder mehrere Kanäle zugeordnet und die Kanäle werden dann mittels vorbestimmbarer Funktionen miteinander verknüpft. Den Kanälen eines Geräts werden somit Funktionen zugeordnet. Systematisch werden somit nicht mehr die Geräte untereinander mit Hilfe schwieriger Kommunikationsregeln und Kommunikationsprotokollen miteinander verbunden, sondern es erfolgt lediglich eine Zuordnung des Kanals (d.h. des in ein oder mehrere Kanäle zerlegten Geräts) zu einer Funktion des Bussystems. In der Parametrierung bzw. Projektierung eines Gerätes erfolgt die Zuordnung der Kanäle zu entsprechenden Funktionen des Bussystems. Die Zuordnung der Kanäle zu den Geräten erfolgt aufgrund der Eigenschaften des Geräts bzw. aufgrund der Verwendung des Geräts. Durch die Zuordnung der Kanäle wird das entsprechende Applikationsprogramm für das Gerät definiert.

Für die Kommunikation eines Gerätes über den Bus (z.B. KNX Bus) stehen Kommunikationsobjekte zur Verfügung, die mit den entsprechenden Kanälen über die Parametrierung verbunden werden. Die Funktionen der einzelnen Kanäle werden durch ein geeignetes Konfigurationsprogramm (z.B. ETS) programmiert.

Die ETS ermöglicht eine Datenübernahme von einer älteren Version einer Projektierung (Parametrierung) eines Gerätetyps in eine neue Version der Projektierung des Gerätetyps.

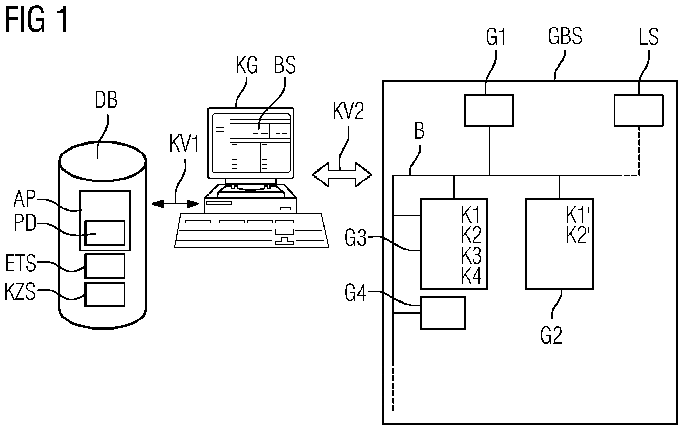

Figur 1 zeigt eine erste beispielhafte Anordnung zur Projektierung einer busorientierten programmierbaren Elektroinstallation GBS. Die beispielhafte Elektroinstallation GBS besteht aus einem Bussystem (z.B. KNX-System) B mit daran angeschlossenen beispielhaften Geräten G1 bis G4. Bei den Busgeräten G1 bis G4 kann es sich um Sensoren (z.B. Temperatursensor, Schalter) bzw. Aktoren (z.B. Beleuchtungsaktor) handeln. Die gestrichelte Linie des Busses B deutet an, dass weitere Geräte am Bus B angeschlossen sein können. Der Bus B kann weiterhin an einer übergeordneten Leitstelle (z.B. Gebäudeleitstelle) angeschlossen sein.

Die Geräte G1 bis G4 umfassen je nach ihrem Funktionsumfang eine Anzahl von Kanälen. Das Gerät G2 umfasst z.B. die zwei Kanäle K1' und K2'. Das Gerät G3 umfasst z.B. die vier Kanäle K1 bis K4. Im Rahmen der Parametrierung bzw. Projektierung werden den Kanälen entsprechende Funktionen der Elektroinstallation GBS zugeordnet.

Weiterhin zeigt Figur 1 ein Konfigurationsgerät KG zur Bereitstellung von Projektierungsdaten PD für ein Applikationsprogramm AP eines Busteilnehmers G1 - G4 der busorientierten programmierbaren Elektroinstallation GBS. Das Konfigurationsgerät KG gemäss Figur 1 umfasst Mittel zum Erzeugen von Projektierungsdaten PD für ein Applikationsprogramm AP eines jeweiligen Busteilnehmers G1 - G), wobei die Projektierungsdaten PD Parameter und Kommunikationsobjekte umfassen. Bei den Mittel zum Erzeugen der Projektierungsdaten PD handelt es sich mit Vorteil um ein geeignetes Konfigurationsprogramm (z.B. eine ETS) mit einer geeigneten Benutzerschnittstelle für einen Bediener.

Das Konfigurationsgerät KG umfasst weiterhin Mittel zum Zuordnen der Parameter und Kommunikationsobjekte zu Kanälen K1 - K4,K1',K2' des jeweiligen Busteilnehmers G1 - G4, wobei das Zuordnen der Parameter und Kommunikationsobjekte zu den Kanälen K1 - K4,K1',K2' des jeweiligen Busteilnehmers G1 - G4 auf einem definierten Kanalzuordnungsschema KZS basiert. Mit Vorteil ist das Kanalzuordnungsschema KZS in einem formalen Kalkül (z.B. XML oder Excel) beschrieben. Dadurch ist das Kanalzuordnungsschema KZS maschinenlesbar und die Zuordnung kann automatisch bzw. quasiautomatisch (d.h. mit wenigen Benutzereingriffen) erfolgen.

Beim Konfigurationsgerät KG kann es sich z.B. um einen PC oder Laptop mit entsprechender Software (z.B. Konfigurationsprogramm, Benutzerschnittstelle mit Ein-/Ausgabemittel) und geeigneten Kommunikationsschnittstellen (z.B. USB-Schnittstelle, WLAN) handeln. Mit Vorteil umfasst das Konfigurationsgerät KG Speichermittel, z.B. eine Datenbank DB auf der die entsprechenden Applikationsprogramme AP, die Projektierungsdaten PD, das Konfigurationsprogramm ETS und das Kanalzuordnungsschema KZS abgespeichert sind. Die Datenbank DB kann sich auch in einer Cloud befinden, worauf das Konfigurationsgerät KG über geeignete Kommunikationsverbindungen KV1 (z.B. Internet) zugreifen kann. Die Datenbank DB kann sich aber auch physikalisch in einem Speichermedium des Konfigurationsgerätes KG befinden. Über eine geeignete Kommunikationsverbindungen KV2 (z.B. USB-Schnittstelle) können die jeweiligen Projektierungsdaten PD auf die jeweiligen Geräte G1 bis G4 des Busses B übertragen werden.

Mit Vorteil umfasst das Konfigurationsgerät KG eine Benutzerschnittstelle BS, wobei, basierend auf dem definierten Kanalzuordnungsschema KZS, auf der Benutzerschnittstelle BS die möglichen Zuordnungen der Parameter und Kommunikationsobjekte zu den Kanälen K1 - K4,K1',K2' des jeweiligen Busteilnehmers G1 - G4, angezeigt werden.

Mit Vorteil erfolgt, basierend auf dem definierten Kanalzuordnungsschema KZS, eine automatische Zuordnung der Parameter und Kommunikationsobjekte zu den Kanälen des jeweiligen Busteilnehmers G1 - G4.

Mit Vorteil sind für ein Applikationsprogramm AP eines Busteilnehmers G1 - G4 vorhandene Projektierungsdaten PD, basierend auf dem definierten Kanalzuordnungsschema KZS, für weitere Busteilnehmer G1 - G4 verwendbar sind. Diese Wiederverwendung bereits vorhandener Projektierungsdaten PD ist auch herstellerübergreifend möglich.

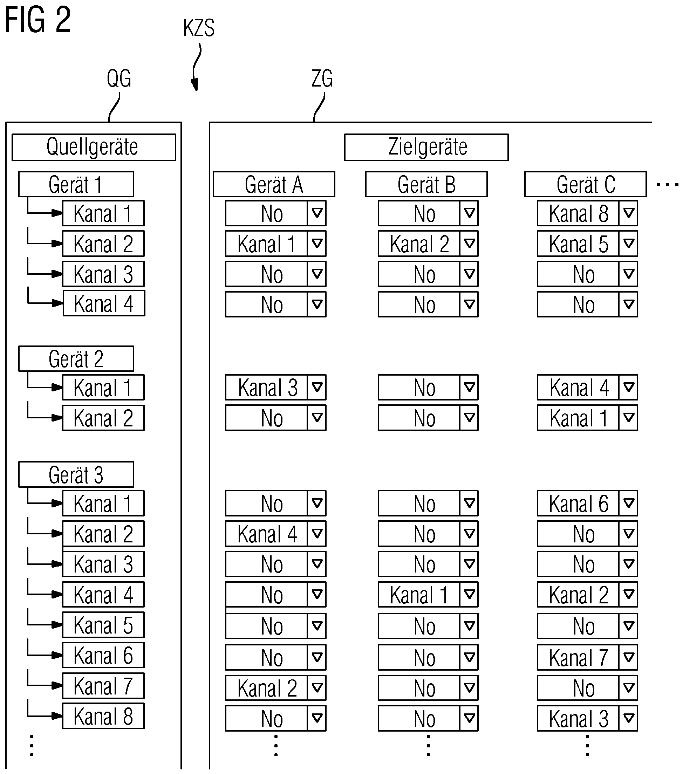

Figur 2 zeigt ein beispielhaftes Kanalzuordnungsschema KZS zur Realisierung der vorliegenden Erfindung. Das erfindungsgemässe Verfahren ermöglicht eine herstellerübergreifende Parameterübernahme (d.h. Parametrierungen können für Geräte unterschiedlichen Hersteller verwendet werden). Auch ist eine Parameterübernahme in ein Gerät mit geringerer Funktionalität als das Ursprungsgerät (Quellgerät) QG möglich. So ist es z.B. möglich eine 8 Kanal Parametrierung in eine 4 Kanalparametrierung zu konvertieren. Das Kanalzuordnungsschema KZS enthält eine Zuordnungsvorschrift ("channel conversion") für die Zuordnung von Kanälen von Quellgeräten QG zu den Kanälen der Zielgeräte ZG.

Das beispielhafte Kanalzuordnungsschema KZS aus Figur 2 zeigt auf der linken Seite beispielhafte Quellgeräte QG. Die beispielhaften Quellgeräte QG umfassen ein Gerät1 (mit Kanälen 1 bis 4), ein Gerät 2 (mit Kanälen 1 und 2), sowie ein Gerät 3 (mit Kanälen 1 bis 8). Die rechte Seite von Figur 2 zeigt beispielhafte Zielgeräte ZG. Die beispielhaften Zielgeräte ZG umfassen die Geräte A, B und C. Mit Hilfe einer grafischen Bedienoberfläche kann ein Benutzer auswählen, welche Kanäle der Quellgeräte QG, d.h. welche Kanäle der Geräte 1, 2 oder 3 in den jeweiligen Zielgeräten ZG, d.h. in den Geräten A, B oder C im Rahmen der Projektierung bzw. Parametrierung übernommen werden sollen. In der Darstellung gemäss Figur 2 erfolgt die Zuordnung der Kanäle beispielhafterweise durch Drop-down-Auswahlboxen (Durch Aktivierung des Symbols ▼ welchen Kanal des jeweiligen Quellgerätes dem jeweiligen Zielgerät zugeordnet werden soll) bei den Zielgeräten ZG für die jeweiligen Kanäle. Dem zweiten Kanal von Zielgerät A wird z.B. vom Quellgerät 1 der Kanal 1 mit seiner entsprechenden Funktion zugeordnet. Den Kanälen eins, drei und vier von Zielgerät A wird kein Kanal ("No")zugeordnet.

Mit dem Kanalzuordnungsschema KZS wird für alle unterstützten Geräte eine Zuordnung von Parametern und Kommunikationsobjekten zu Kanälen definiert. D.h. für alle unterstützen Geräte wird ein Mapping (welche(r) Parameter wird wie in welche(n) Parameter gewandelt) erstellt. Durch diese Zuordnungen und Mappings ist es möglich auf dem UI (Benutzerschnittstelle eines Konfigurationsgerätes; z.B. entsprechend ausgerüsteter Computer) für die Quellgeräte alle Kanäle auswählbar anzubieten. So kann für einzelne Kanäle des Zielgerätes eine Zuordnung zu den Kanälen der Quellgeräte hergestellt werden. Durch diese Zuordnungen und Mappings ist es möglich einen generischen Konverter zu erstellen, der auf Basis dieser Daten die Konvertierungen automatisch durchführen kann. Für eine Konvertierung in mehrere Geräte ist die Benutzerschnittstelle entsprechend ausgebildet.

Mit Hilfe des Kanalzuordnungsschema KZS ist eine Konvertierung der Parametrierung von mehreren Geräten in ein neues Gerät oder von Teilmengen der Parametrierung (z.B. nur ein Kanal) möglich. Weiterhin ist es möglich eine Teilmenge einer vorhandenen Parametrierung in ein anderes Gerät zu übernehmen und Parametrierungen von mehreren Geräten in ein Gerät zu übernehmen. Auch können Parametrierungen von mehreren Quellgeräten in mehrere neue Zielgeräte übernommen werden (z.B. kann die Parametrierung für eine Funktionseinheit aus Taster, Bewegungsmelder, Lichtsensor und Dimmaktor mit Lichtregelung in: Taster mit Lichtregelung bzw. Bewegungsmelder mit Lichtsensor und Dimmaktor verwendet werden.

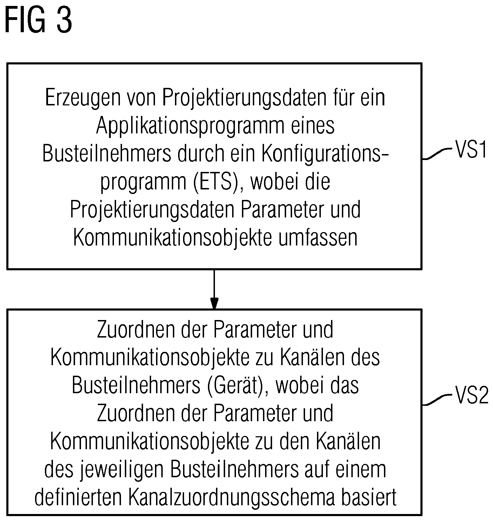

Figur 3 zeigt ein beispielhaftes Ablaufdiagramm für ein Verfahren zur Projektierung von Busteilnehmern (Geräten) einer busorientierten programmierbaren Elektroinstallation (z.B. ein KNX System). Das Verfahren umfasst:
(VS1) Erzeugen von Projektierungsdaten PD für ein Applikationsprogramm eines Busteilnehmers durch ein Konfigurationsprogramm (z.B. ETS), wobei die Projektierungsdaten Parameter und Kommunikationsobjekte umfassen;
(VS2) Zuordnen der Parameter und Kommunikationsobjekte zu Kanälen des Busteilnehmers, wobei das Zuordnen der Parameter und Kommunikationsobjekte zu den Kanälen des jeweiligen Busteilnehmers auf einem definierten Kanalzuordnungsschema (KZS; siehe Figur 2) basiert.

Optional werden, basierend auf dem definierten Kanalzuordnungsschema (KZS), im Konfigurationsprogramm die möglichen Zuordnungen der Parameter und Kommunikationsobjekte zu den Kanälen des jeweiligen Busteilnehmers, in einer entsprechenden Benutzerschnittstelle (mit Vorteil handelt es sich um eine grafische oder menügeführte Benutzerschnittstelle) angeboten werden.

Optional erfolgt, basierend auf dem definierten Kanalzuordnungsschema (KZS), durch das Konfigurationsprogramm (z.B. ETS) eine automatische Zuordnung der Parameter und Kommunikationsobjekte zu den Kanälen des jeweiligen Busteilnehmers.

Optional werden die Projektierungsdaten (PD) für das Applikationsprogramm (AP) des Busteilnehmers, basierend auf dem definierten Kanalzuordnungsschema (KZS), für einen weiteren Busteilnehmer verwendet. Mit Vorteil ist das Kanalzuordnungsschema in einem maschinenlesbaren Format (z.B. XML, Excel) beschrieben.

Mit Vorteil werden die Projektierungsdaten (PD) in einem strukturierten Format erzeugt. Die ermöglicht einen einfachen Import und Export der Projektierungsdaten.

Bei einer ETS (als Konfigurationsprogramm) handelt es sich um eine Software, die auf einem PC bzw. Laptop lauffähig ist, der z.B. über eine RS232-Schnittstelle mit dem Bus verbunden wird. Bei der ETS handelt es sich um ein datenbankbasiertes graphisches Werkzeug zur Projektierung einer busorientierten programmierbaren Elektroinstallation. In der ETS-Datenbank DB sind die Projektierungsdaten PD für jeden einzelnen Busteilnehmer bzw. jedes einzelne Applikationsprogramm AP getrennt voneinander gespeichert.

Durch das Verfahren wird es erstmals ermöglicht, dass bestehende Konvertierungen ohne weitere Änderungen in andere/neue Geräte übernommen werden können. Dies kann z.B. erforderlich sein wenn vorhandene Geräte in energieeffizientere Geräte gewandelt werden sollen. Es ist dabei nicht notwendig, dass vorhandene Funktionsaufteilungen in den neuen Geräten identisch vorhanden sein müssen. Da dieses Verfahren Herstellerunabhängig ist, können auch Herstellerübergreifende Konvertierungen dargestellt werden.

Verfahren und Konfigurationsgerät zur Projektierung von Busteilnehmern einer busorientierten programmierbaren Elektroinstallation, wobei Projektierungsdaten für ein Applikationsprogramm eines Busteilnehmers (z.B. Busgerätes) durch ein Konfigurationsprogramm (z.B. ETS) erzeugt werden, wobei die Projektierungsdaten Parameter und Kommunikationsobjekte umfassen; und wobei Parameter und Kommunikationsobjekte zu Kanälen des jeweiligen Busteilnehmers, basierend auf einem definierten Kanalzuordnungsschema, zugeordnet werden.

### Bezugszeichen

- G1 - G4: Busgerät
- B: Bus
- GBS: Gebäudeautomatisierungssystem
- K1 - K4,K1',K2': Kanal
- LS: Leitstelle
- DB: Speichermedium
- KV1, KV2: Kommunikationsverbindung
- KG: Konfigurationsgerät
- ETS: Konfigurationsprogramm
- QG: Quellgeräte
- ZG: Zielgeräte
- BS: Benutzerschnittstelle
- AP: Applikationsprogramm
- PD: Projektierungsdaten
- KZS: Kanalzuordnungsschema
- VS1 - VS2: Verfahrensschritt

## Patentansprüche

1. Verfahren zur Projektierung von Busteilnehmern (G1 - G4) einer busorientierten programmierbaren Elektroinstallation (GBS), das Verfahren umfassend:
Erzeugen von Projektierungsdaten (PD) für ein Applikationsprogramm (AP) eines Busteilnehmers (G1 - G4) durch ein Konfigurationsprogramm (ETS), wobei die Projektierungsdaten (PD) Parameter und Kommunikationsobjekte umfassen;
Zuordnen der Parameter und Kommunikationsobjekte zu Kanälen (K1 - K4,K1',K2') des Busteilnehmers (G1 - G4), wobei das Zuordnen der Parameter und Kommunikationsobjekte zu den Kanälen (K1 - K4,K1',K2') des jeweiligen Busteilnehmers (G1 - G4) auf einem definierten Kanalzuordnungsschema (KZS) basiert, wobei das Kanalzuordnungsschema (KZS) eine Zuordnungsvorschrift für die Zuordnung von Kanälen von Quellgeräten, als Busteilnehmer (G1 - G4), zu den Kanälen von Zielgeräten, als Busteilnehmer (G1 - G4), enthält, und wobei die Projektierungsdaten (PD) für das Applikationsprogramm (AP) des Busteilnehmers (G1 - G4), basierend auf dem definierten Kanalzuordnungsschema (KZS), für einen weiteren Busteilnehmer (G1 - G4) verwendet werden.

2. Verfahren nach Anspruch 1, wobei, basierend auf dem definierten Kanalzuordnungsschema (KZS), im Konfigurationsprogramm (ETS) die möglichen Zuordnungen der Parameter und Kommunikationsobjekte zu den Kanälen (K1 - K4,K1',K2') des jeweiligen Busteilnehmers (G1 - G4), in einer entsprechenden Benutzerschnittstelle (BS) angeboten werden.

3. Verfahren nach einem der vorstehenden Ansprüche, wobei, basierend auf dem definierten Kanalzuordnungsschema (KZS), durch das Konfigurationsprogramm (ETS) eine automatische Zuordnung der Parameter und Kommunikationsobjekte zu den Kanälen (K1 - K4,K1',K2') des jeweiligen Busteilnehmers (G1 - G4) erfolgt.

4. Verfahren nach einem der vorstehenden Ansprüche, wobei die Projektierungsdaten (PD) in einem strukturierten Format erzeugt werden.

5. Computerprogramm zur Projektierung einer busorientierten programmierbaren Elektroinstallation (GBS) mit Instruktionen zur Ausführung des Verfahrens nach einem der Patentansprüche 1 bis 4.

6. Computerlesbares Medium, das auf einem Computer ausführbare Befehle aufweist zur Projektierung einer busorientierten programmierbaren Elektroinstallation (GBS) nach einem Verfahren nach einem der Patentansprüche 1 bis 4.

7. Konfigurationsgerät (KG) zur Bereitstellung von Projektierungsdaten (PD) für ein Applikationsprogramm (AP) eines Busteilnehmers (G1 - G4) einer busorientierten programmierbaren Elektroinstallation (GBS), das Konfigurationsgerät (ETS) umfassend:
Mittel (ETS) zum Erzeugen von Projektierungsdaten (PD) für ein Applikationsprogramm (AP) eines Busteilnehmers (G1 - G4), wobei die Projektierungsdaten (PD) Parameter und Kommunikationsobjekte umfassen;
Mittel zum Zuordnen der Parameter und Kommunikationsobjekte zu Kanälen (K1 - K4,K1',K2') des Busteilnehmers (G1 - G4), wobei das Zuordnen der Parameter und Kommunikationsobjekte zu den Kanälen (K1 - K4,K1',K2') des jeweiligen Busteilnehmers (G1 - G4) auf einem definierten Kanalzuordnungsschema (KZS) basiert, wobei das Kanalzuordnungsschema (KZS) eine Zuordnungsvorschrift für die Zuordnung von Kanälen von Quellgeräten, als Busteilnehmer (G1 - G4), zu den Kanälen von Zielgeräten, als Busteilnehmer (G1 - G4), enthält, und wobei die Projektierungsdaten (PD) für das Applikationsprogramm (AP) des Busteilnehmers (G1 - G4), basierend auf dem definierten Kanalzuordnungsschema (KZS), für einen weiteren Busteilnehmer (G1 - G4) verwendet werden.

8. Konfigurationsgerät (KG) nach Anspruch 7, weiter umfassend eine Benutzerschnittstelle (BS), wobei, basierend auf dem definierten Kanalzuordnungsschema (KZS), auf der Benutzerschnittstelle (BS) die möglichen Zuordnungen der Parameter und Kommunikationsobjekte zu den Kanälen (K1 - K4,K1',K2') des jeweiligen Busteilnehmers (G1 - G4), angezeigt werden.

9. Konfigurationsgerät (KG) nach Anspruch 7 oder 8, wobei, basierend auf dem definierten Kanalzuordnungsschema (KZS), eine automatische Zuordnungen der Parameter und Kommunikationsobjekte zu den Kanälen des jeweiligen Busteilnehmers (G1 - G4) erfolgt.

## Claims

1. Method for the planning of bus subscribers (G1 - G4) of a bus-oriented programmable electrical installation (GBS), the method comprising:
generating planning data (PD) for an application program (AP) of a bus subscriber (G1 - G4) by way of a configuration program (ETS), wherein the planning data (PD) comprises parameters and communication objects;
allocating the parameters and communication objects to channels (K1 - K4,K1',K2') of the bus subscriber (G1 - G4), wherein the allocation of the parameters and communication objects to the channels (K1 - K4,K1',K2') of the respective bus subscriber (G1 - G4) is based on a defined channel allocation scheme (KZS), wherein the channel allocation scheme (KZS) contains an allocation specification for the allocation of channels of source devices, in the form of bus subscribers (G1 - G4), to the channels of target devices, in the form of bus subscribers (G1 - G4), and wherein the planning data (PD) for the application program (AP) of the bus subscriber (G1 - G4), based on the defined channel allocation scheme (KZS), is used for a further bus subscriber (G1 - G4).

2. Method according to claim 1, wherein in the configuration program (ETS), based on the defined channel allocation scheme (KZS), the possible allocations of the parameters and communication objects to the channels (K1 - K4,K1',K2') of the respective bus subscriber (G1 - G4) are offered in a corresponding user interface (BS).

3. Method according to one of the preceding claims, wherein the configuration program (ETS), based on the defined channel allocation scheme (KZS), performs an automatic allocation of the parameters and communication objects to the channels (K1 - K4,K1',K2') of the respective bus subscriber (G1 - G4).

4. Method according to one of the preceding claims, wherein the planning data (PD) is generated in a structured format.

5. Computer program for the planning of a bus-oriented programmable electrical installation (GBS) with instructions for carrying out the method according to one of claims 1 to 4.

6. Computer-readable medium, which has commands which can be executed on a computer for the planning of a bus-oriented programmable electrical installation (GBS) according to a method according to one of claims 1 to 4.

7. Configuration device (KG) for providing planning data (PD) for an application program (AP) of a bus subscriber (G1 - G4) of a bus-oriented programmable electrical installation (GBS), the configuration device (ETS) comprising:
means (ETS) for generating planning data (PD) for an application program (AP) of a bus subscriber (G1 - G4), wherein the planning data (PD) comprises parameters and communication objects;
means for allocating the parameters and communication objects to channels (K1 - K4,K1',K2') of the bus subscriber (G1 - G4), wherein the allocation of the parameters and communication objects to the channels (K1 - K4,K1',K2') of the respective bus subscriber (G1 - G4) is based on a defined channel allocation scheme (KZS), wherein the channel allocation scheme (KZS) contains an allocation specification for the allocation of channels of source devices, in the form of bus subscribers (G1 - G4), to the channels of target devices, in the form of bus subscribers (G1 - G4), and wherein the planning data (PD) for the application program (AP) of the bus subscriber (G1 - G4), based on the defined channel allocation scheme (KZS), is used for a further bus subscriber (G1 - G4).

8. Configuration device (KG) according to claim 7, further comprising a user interface (BS), wherein, based on the defined channel allocation scheme (KZS), the possible allocations of the parameters and communication objects to the channels (K1 - K4,K1',K2') of the respective bus subscriber (G1 - G4) are indicated on the user interface (BS).

9. Configuration device (KG) according to claim 7 or 8, wherein, based on the defined channel allocation scheme (KZS), an automatic allocation of the parameters and communication objects to the channels of the respective bus subscriber (G1 - G4) takes place.

## Revendications

1. Procédé de conception des utilisateurs de bus (G1 - G4) d'une installation électrique programmable connectée par un bus (GBS), le procédé comportant :
génération de données de conception (PD) pour un programme d'application (AP) d'un utilisateur de bus (G1 - G4) par un programme de configuration (ETS), les données de conception (PD) comprenant des paramètres et des objets de communication ;
attribution des paramètres et des objets de communication à des canaux (K1 - K4, K1', K2') de l'utilisateur de bus (G1 - G4), l'attribution des paramètres et des objets de communication aux canaux (K1 - K4, K1', K2') de l'utilisateur de bus respectif (G1 - G4) étant basée sur un schéma d'attribution de canal défini (KZS), le schéma d'attribution de canal (KZS) étant une consigne d'attribution pour l'attribution de canaux de dispositifs sources, comme utilisateur de bus (G1 - G4), à des canaux de dispositifs cibles, comme utilisateurs de bus (G1 - G4), les données de conception (PD) pour le programme d'application (AP) de l'utilisateur de bus (G1 - G4), basées sur le schéma d'attribution des canaux défini (KZS), étant utilisées pour un utilisateur de bus (G1 - G4) supplémentaire.

2. Procédé selon la revendication 1, dans lequel, sur la base du schéma défini d'attribution des canaux (KZS), les attributions possibles des paramètres et des objets de communication aux canaux (K1 - K4, K1', K2') de l'utilisateur de bus respectif (G1 - G4) dans le programme de configuration (ETS) sont proposées dans une interface utilisateur (BS) correspondante.

3. Procédé selon l'une des revendications précédentes, dans lequel, sur la base du schéma défini d'attribution des canaux (KZS), a l'aide du programme de configuration (ETS), une attribution automatique des paramètres et des objets de communication aux canaux (K1 - K4, K1', K2') de l'utilisateur de bus respectif (G1 - G4) est réalisée.

4. Procédé selon l'une des revendications précédentes, dans lequel les données de conception (PD) sont générées sous un format structuré.

5. Logiciel conçu pour la conception d'une installation électrique programmable (GBS) connectée par un bus comprenant des ordres de réalisation du procédé selon l'une des revendications 1 à 4.

6. Support lisible par ordinateur comportant des ordres exécutables sur un ordinateur pour concevoir une installation électrique programmable (GBS) connectée par un bus selon un procédé selon l'une des revendications 1 à 4.

7. Dispositif de configuration (KG) pour la mise à disposition de données de conception (PD) pour un programme d'application (AP) d'un utilisateur de bus (G1 - G4) d'une installation électrique programmable (GBS) connectée par un bus, le dispositif de configuration (ETS) comprenant :
des moyens (ETS) de génération de données de conception (PD) pour un programme d'application (AP) d'un utilisateur de bus (G1 - G4), les données de conception (PD) comprenant des paramètres et des objets de communication ;
des moyens d'attribution des paramètres et des objets de communication à des canaux (K1 - K4, K1', K2') de l'utilisateur de bus (G1 - G4), l'attribution des paramètres et des objets de communication aux canaux (K1 - K4, K1', K2') de l'utilisateur de bus respectif (G1 - G4) étant basée sur un schéma d'attribution de canal défini (KZS), le schéma d'attribution de canal (KZS) étant une consigne d'attribution pour l'attribution de canaux de dispositifs sources, comme utilisateur de bus (G1 - G4), à des canaux de dispositifs cibles, comme utilisateurs de bus (G1 - G4), les données de configuration (PD) pour le programme d'application (AP) de l'utilisateur de bus (G1 - G4), basées sur le schéma d'attribution des canaux défini (KZS), sont utilisées pour un utilisateur de bus (G1 - G4) supplémentaire.

8. Dispositif de configuration (KG) selon la revendication 7, comprenant par ailleurs une interface utilisateur (BS) dans laquelle, sur la base du schéma défini d'attribution des canaux (KZS), les attributions possibles des paramètres et des objets de communication aux canaux (K1 - K4, K1', K2') de l'utilisateur de bus correspondant (G1 - G4) sont indiquées dans l'interface utilisateur (BS).

9. Dispositif de configuration (KG) selon la revendication 7 ou 8, dans laquelle, sur la base du schéma défini d'attribution des canaux (KZS), une attribution automatique des paramètres et des objets de communication aux canaux de l'utilisateur de bus correspondant (G1 - G4) est réalisée.
